# EUROPÄISCHE PATENTANMELDUNG

(11) **EP 3 656 239 A1**
(43) Veröffentlichungstag der Anmeldung: **27.05.2020**
(21) Anmeldenummer: 18208389.9
(22) Anmeldetag: 26.11.2018
(51) Int. Cl.: A43B 9/02, A43B 9/18, A43B 13/38, B29D 35/06

(54) **VERFAHREN ZUM HERSTELLEN EINES SCHUHS**

(71) Anmelder: ATMOS airwalk ag, 8152 Glattbrugg Zürich (CH)
(72) Erfinder: MÖHLMANN, Wilhelm, 8005 Zürich (CH); SCHMIDT, Jens, 66957 Obersimten (DE)
(74) Vertreter: Zenz Patentanwälte Partnerschaft mbB

(57) **Zusammenfassung**

Bei einem Verfahren zum Herstellen eines Schuhs (1) wird zunächst ein Schaft hergestellt, indem ein Schaftoberteil und eine Brandsohle durch eine Nahtverbindung (7) miteinander verbunden werden. Die Nahtverbindung (7) wird zwischen einer Materialschicht des Schaftoberteils (2) und einer Materialschicht der Brandsohle (6) derart ausgeführt, dass die dem Schuhinnenraum (5) zugewandten Oberflächen der Materialschicht des Schaftoberteils (2) und der Materialschicht der Brandsohle (6) an der Nahtverbindung (7) aufeinander liegen und sich die Nahtverbindung nicht in den Schuhinnenraum (5), sondern nach außen erstreckt. Außerdem wird ein Maschinen-Leisten bereitgestellt, dessen Unterseite ein dem Relief einer Fußsohle nachgebildetes oder angenähertes Relief aufweist. Dann wird der Schaft auf den Maschinen-Leisten gespannt. Ein sohlenseitiger Bereich des Schaftes, der die Brandsohle, die Nahtverbindung und einen sich an die Nahtverbindung anschließenden Bereich des Schaftoberteils umfasst, wird mit einem Kunststoffmaterial umspritzt, um eine Kunststoffsohle (3) auszubilden. Während des Umspritzens wird aufgrund des Spritzdrucks die Brandsohle an die Unterseite des Maschinen-Leistens gepresst, bis das Relief der Innenfläche der Brandsohle zu dem Relief der Unterseite des Maschinen-Leistens komplementär ist. Die Nahtverbindung (7) wird vollständig von dem Kunststoffmaterial eingeschlossen. Nach dem Erstarren des Kunststoffmaterials wird der Schuh (1) von dem Maschinen-Leisten abgenommen.

## Beschreibung

Die Erfindung betrifft ein Verfahren zum Herstellen eines Schuhs, bei dem ein Schaft hergestellt wird, indem ein Schaftoberteil und eine Brandsohle durch eine Nahtverbindung miteinander verbunden werden, ein Maschinen-Leisten bereitgestellt und der hergestellte Schaft über den Maschinen-Leisten gespannt wird, ein sohlenseitiger Bereich des Schaftes, der die Brandsohle, die Nahtverbindung und einen sich an die Nahtverbindung anschließenden Bereich des Schaftoberteils umfasst, mit einem Kunststoffmaterial umspritzt wird, um eine Kunststoffsohle auszubilden, und nach dem Erstarren des Kunststoffmaterials der Schuh von dem Maschinen-Leisten abgenommen wird.

Es sind im Stand der Technik eine Vielzahl von Verfahren zum Herstellen eines Schuhs (hier häufig "Schuhbau" genannt) bekannt. Üblicherweise bestehen Schuhe aus einem Schuhoberteil, dem Schaft, und einem Boden, der Sohle, die durch unterschiedliche Macharten miteinander verbunden werden. Im Rahmen dieser Erfindungsbeschreibung soll unter einem Schaft das mit der Brandsohle (Innensohle) verbundene Schaftoberteil verstanden werden. Der Boden umfasst hierbei sämtliche Sohlenschichten unter der Brandsohle, d.h. die Laufsohlenschicht und eine oder mehrere Zwischensohlenschichten zwischen der Laufsohle und der Brandsohle. Die Macharten unterscheiden sich hinsichtlich der Art der Verbindungstechnik (Nähen, Kleben, Anspritzen) und der Schichtmaterialien und -aufbauten des Schafts und der Sohle.

Häufig werden die Schichten des Schaftoberteils (Leder oder Textilschichten) mit der Brandsohle durch eine oder mehrere Nähte verbunden, wobei die Naht - je nach Machart - im Schuhinnenraum sichtbar ist oder nicht.

Bei Macharten, bei denen das Schichtmaterial (z.B. Leder) des Schaftoberteils im Bereich der Naht mit seiner dem Schuhinnenraum zugewandten Seite unter der Brandsohle liegt, d.h. an der vom Schuhinnenraum abgewandten Seite der Brandsohle anliegt, beispielsweise bei durchgenähten Macharten oder bei Macharten mit Strobelnaht, ist es erforderlich, diese Naht durch eine in den Schuhinnenraum einzulegende Decksohle abzudecken. Üblicherweise wird über der Brandsohle eine polsternde Decksohle eingelegt, deren Unterseite auf der im Wesentlichen ebenen Brandsohle aufliegt und deren Oberseite an das Relief eines Fußes angepasst ist. Diese Decksohle deckt außerdem etwaige Unebenheiten der Naht ab.

Aufgabe der Erfindung ist es, ein einfaches und kostengünstiges Herstellungsverfahren für einen Schuh mit hohem Laufkomfort zur Verfügung zu stellen.

Diese Aufgabe wird bei einem Verfahren der eingangs genannten Art, bei dem eine Kunststoffsohle angespritzt wird, erfindungsgemäß durch ein Verfahren mit den Merkmalen des Anspruchs 1 gelöst.

Bei dem erfindungsgemäßen Verfahren zum Herstellen eines Schuhs wird zunächst a) ein Schaft hergestellt, indem ein Schaftoberteil und eine Brandsohle durch eine Nahtverbindung miteinander verbunden werden, wobei die Nahtverbindung zwischen einer Materialschicht des Schaftoberteils und einer Materialschicht der Brandsohle derart ausgeführt wird, dass die dem Schuhinnenraum zugewandten Oberflächen der Materialschicht des Schaftoberteils und der Materialschicht der Brandsohle an der Nahtverbindung aufeinander liegen und sich die Nahtverbindung nicht in den Schuhinnenraum, sondern nach außen erstreckt. Unter einer Materialschicht soll hier beispielsweise ein Leder, ein textiles Material, eine Folie aus einem Kunststoff oder auch ein Verbundmaterial, das mehrere solcher Schichten umfasst, verstanden werden. Es wird b) ein Maschinen-Leisten bereitgestellt, dessen Unterseite ein Relief aufweist, das dem Relief einer Fußsohle nachgebildet oder angenähert ist, und c) der hergestellte Schaft auf den Maschinen-Leisten gespannt (dies wird üblicherweise "Aufleisten" genannt). Dann wird d) ein sohlenseitiger Bereich des Schaftes, der die Brandsohle, die Nahtverbindung und einen sich an die Nahtverbindung anschließenden Bereich des Schaftoberteils umfasst, mit einem Kunststoffmaterial umspritzt, um eine Kunststoffsohle auszubilden. Der sich nach oben an die Nahtverbindung anschließende Bereich des Schaftoberteils ist beispielsweise nur einige Millimeter breit, kann aber auch mehrere Zentimeter breit sein, sofern ein breiter Bereich des Schaftoberteils von dem zu umspritzenden Kunststoffmaterial überdeckt werden soll. Dabei wird während des Umspritzens des Kunststoffmaterials aufgrund des Spritzdrucks die Brandsohle an die Unterseite des Maschinen-Leistens gepresst, bis das Relief der Innenfläche der Brandsohle zu dem Relief der Unterseite des Maschinen-Leistens komplementär ist. Außerdem wird dabei die Nahtverbindung von dem Kunststoffmaterial eingeschlossen. Schließlich wird e) nach dem Erstarren des Kunststoffmaterials der Schuh von dem Maschinen-Leisten abgenommen (dies wird üblicherweise "Ausleisten" genannt). Bei einer Ausführungsform des Verfahrens zum Herstellen eines Schuhs werden im Schritt a) das Schaftoberteil und die Brandsohle durch eine Spannnaht miteinander verbunden.

Bei dem erfindungsgemäßen Verfahren wird die Nahtverbindung zwischen dem Schaftoberteil und der Brandsohle derart ausgeführt, dass die dem Schuhinnenraum zugewandten Oberflächen des Schaftoberteils und der Brandsohle an der Nahtverbindung aufeinander liegen und sich die Nahtverbindung vom Schuhinnenraum weg nach außen erstreckt. Ein zweiter wesentlicher Aspekt ist die Bereitstellung eines Maschinen-Leistens, der eine Unterseite aufweist, die dem Relief einer Fußsohle nachgebildet oder angenähert ist. Durch die Kombination dieser beiden Aspekte kann einerseits die Brandsohle während des Umspritzens des Kunststoffmaterials an die Unterseite des Maschinen-Leistens gepresst werden, so dass das Relief der Innenfläche der Brandsohle nach dem Erstarren des Kunststoffmaterials dem Relief einer Fußsohle angenähert ist. Andererseits kann die Nahtverbindung von dem Kunststoffmaterial eingeschlossen werden. Somit kann auf das übliche Einlegen einer Decksohle zum Zwecke der Nahtabdeckung und der Bildung eines Sohlenreliefs verzichtet werden, was die Herstellung ohne Verzicht auf Komfort vereinfacht.

Bei einer bevorzugten Ausführungsform des Verfahrens zum Herstellen eines Schuhs wird im Schritt d) vor dem Umspritzen des Kunststoffmaterials eine mehrteilige Spritzgießform um den sohlenseitigen Bereich des Schaftes derart geschlossen, dass sie allseitig dicht an der Oberfläche des Schaftoberteils anliegt und den Raum für das einzubringende Kunststoffmaterial umschließt, und wird im Schritt e) die Spritzgießform nach dem Erstarren des Kunststoffmaterials geöffnet, bevor der Schuh von dem Maschinen-Leisten abgenommen wird. Damit kann die Formung der Brandsohle und das Herstellen der gesamten Sohle in einem Spritzgießschritt kostengünstig realisiert werden.

Bei einer vorteilhaften Weiterbildung dieses Verfahrens wird vor dem Schließen der mehrteiligen Spritzgießform in ein Unterteil der mehrteiligen Spritzgießform (auch Laufsohlenform genannt), welches eine Bodenfläche mit einem zum Laufsohlenprofil des herzustellenden Schuhs komplementären Profil aufweist, eine Schicht eines weiteren Kunststoffmaterials eingebracht. Das weitere Kunststoffmaterial, welches die Laufsohle ausbildet, kann von dem Kunststoffmaterial, mit dem der sohlenseitige Bereich des Schaftes umspritzt wird, abweichen und somit an die speziellen Anforderungen an eine Laufsohle angepasst werden, zum Beispiel eine verbesserte Abriebfestigkeit aufweisen.

Bei einer bevorzugten Variante dieser letztgenannten Weiterbildung wird die Schicht des weiteren Kunststoffmaterials durch Aufsprühen auf die Bodenfläche eingebracht. Die Aufsprüh- oder Spray-Technik gestattet die gezielte Einbringung definierter Materialmengen und Materialverteilungen in die Laufsohlenprofilbereiche des Unterteils der mehrteiligen Spritzgießform.

Bei der einfachsten bevorzugten Ausführungsform bestehen sowohl das Schaftoberteil als auch die Brandsohle aus jeweils einer Materialschicht (beispielsweise Leder, Textilgewebe oder Kunststofffolie), die optimal an die jeweils gewünschten Eigenschaften des Schaftoberteils bzw. der Brandsohle angepasst ist. Dies vereinfacht die Herstellung.

Eine andere Ausführungsform des erfindungsgemäßen Verfahrens ist dadurch gekennzeichnet, dass das Schaftoberteil aus mehreren Materialschichten besteht, beispielsweise einem Außenschaft und einem Futterschaft, und dass im Schritt a) die Nahtverbindung zwischen wenigstens einer dem Schuhinnenraum zugewandten inneren Materialschicht (beispielsweise dem Futterschaft) oder sämtlichen Materialschichten des Schaftoberteils und der Materialschicht der Brandsohle ausgeführt wird.

In ähnlicher Weise kann bei einer Weiterbildung des Verfahrens auch die Brandsohle aus mehreren Materialschichten bestehen, wobei im Schritt a) die Nahtverbindung zwischen wenigstens einer dem Schuhinnenraum zugewandten inneren Materialschicht oder sämtlichen Materialschichten der Brandsohle und der Materialschicht des Schaftoberteils ausgeführt wird.

Bei einer bevorzugten Weiterbildung des Verfahrens zum Herstellen eines Schuhs wird im Schritt d) der sohlenseitige Bereich des Schaftes mit einem Polyurethan mit einer Shorehärte zwischen 35 und 60 Shore A umspritzt. Vorzugsweise wird im Schritt d) der sohlenseitige Bereich des Schaftes mit einem Polyurethan mit einer Shorehärte umspritzt wird, die bei Sohlen mit etwa 10-20 mm Absatzhöhe bei etwa 35-40 Shore A, bei Sohlen mit etwa 20-35 mm Absatzhöhe bei etwa 40-55 Shore A und bei Sohlen mit etwa 40-50 mm Absatzhöhe bei etwa 55-60 Shore A liegt. Eine derart weiche Kunststoffsohle verbessert den Tragekomfort, wobei diese weiche Kunststoffsohle vorzugsweise als Zwischensohle ausgeführt und mit einer Laufsohlenschicht aus einem abriebfesten Kunststoffmaterial - vorzugsweise in der oben beschriebenen Weise - kombiniert wird.

Bei einer bevorzugten Ausführungsform wird im Schritt d) der sohlenseitige Bereich des Schaftes mit einem Polyether-Polyurethan mit einer Dichte zwischen 0,3 - 0,4 g/cm³ umspritzt. Beispielsweise kann hier ein Polyurethan der Typen DALTOPED® LF 35404, DALTOPED® Lite Energy oder DALTOPED® X-Lite (DALTOPED ist eine eingetragene Marke der Huntsman International LLC) oder ein vergleichbares Polyurethan geringer Dichte und dynamischer Energierückführung, das hohe Rebound- und lange anhaltende Dämpfungseigenschaften bereitstellt, verwendet werden. Dieses Verfahren, welches die Verwendung eines solchen Kunststoffmaterials mit der Reliefausbildung an der Oberfläche der Brandsohle und der Nahteinbettung in einem Spritzgießschritt kombiniert, gestattet eine einfache Herstellung eines Schuhs mit einem hohen Tragekomfort.

Vorteilhafte und/oder bevorzugte Weiterbildungen der Erfindung sind in den Unteransprüchen gekennzeichnet.

Im Folgenden wird die Erfindung anhand eines in der Zeichnung dargestellten bevorzugten Ausführungsbeispiels näher erläutert. In der Zeichnung zeigen:
Figur 1 eine schematische Seitenansicht und
Figur 2 eine Querschnittansicht eines nach dem erfindungsgemäßen Verfahren hergestellten Schuhs.

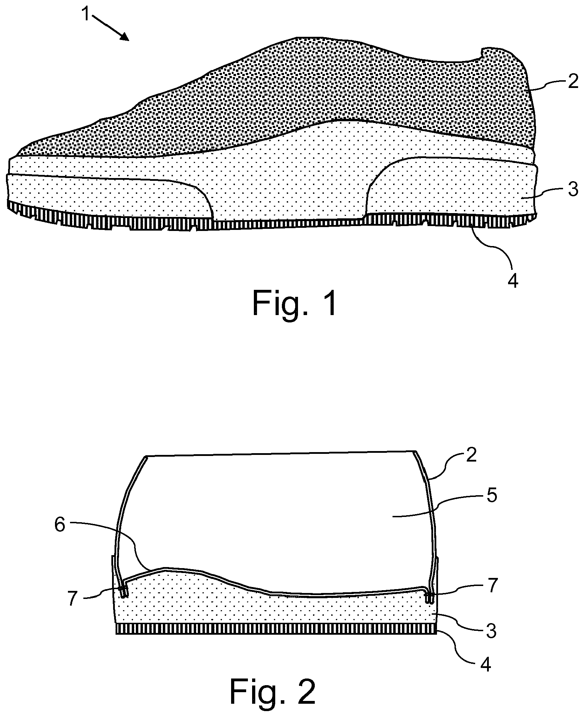

Der in Figur 1 schematisch dargestellte Schuh 1 weist einen Schaft mit einem Schaftoberteil 2 auf, an dem durch Umspritzen eines sohlenseitigen Bereiches des Schaftes eine Kunststoffsohle 3 angeformt ist. Die Kunststoffsohle 3 stellt eine Zwischensohle dar, an deren Unterseite eine Laufsohle 4 angeformt ist.

Figur 2 zeigt eine schematische Schnittansicht des Schuhs in einer vertikalen Ebene senkrecht zur Zeichnungsebene der Figur 1. An das Schaftoberteil 2 ist unten mittels einer Spannnaht 7 eine Brandsohle 6 angenäht. Der aus Schaftoberteil 2 und Brandsohle 6 bestehende Schaft umgibt den Schuhinnenraum 5. Bei dem in Figur 2 schematisch dargestellten Ausführungsbeispiel besteht das Schaftoberteil 2 aus einer einzigen Materialschicht, beispielsweise aus Leder. Ebenso besteht die Brandsohle 6 aus einer Materialschicht, beispielsweise ebenfalls Leder. Die Nahtverbindung 7 zwischen der Materialschicht des Schaftoberteils 2 und der Materialschicht der Brandsohle 6 ist derart ausgeführt, dass die dem Schuhinnenraum 5 zugewandten Oberflächen der Materialschicht des Schaftoberteils 2 und der Materialschicht der Brandsohle 6 an der Nahtverbindung 7 aufeinander liegen, so dass sich die Spannnaht 7 nicht in den Schuhinnenraum 5, sondern nach außen, das heißt nach unten zur Sohle hin erstreckt. An einen sohlenseitigen Bereich des Schaftes, der die Brandsohle 6, die Nahtverbindung 7 und einen sich an die Nahtverbindung anschließenden schmalen Bereich des Schaftoberteils 2 umfasst, ist eine Kunststoffsohle 3 angespritzt.

Wie nachfolgend beschrieben wird, erfolgt das Umspritzen des sohlenseitigen Bereichs des Schaftes derart, dass während des Umspritzens des Kunststoffmaterials aufgrund des Spritzdrucks die Brandsohle 6 an die Unterseite eines Maschinen-Leistens gepresst wird, bis das Relief der Innenfläche der Brandsohle 6 zu dem Relief der Unterseite des Maschinen-Leistens komplementär ist, d.h. die Innenfläche der Brandsohle 6 ganzflächig an der Unterseite des Maschinen-Leistens anliegt. Figur 2 veranschaulicht schematisch die das Relief aufweisende Brandsohle 6. Zugleich wird beim Anspritzen des Kunststoffmaterials die Spannnaht 7 vollständig umschlossen.

Bei dem erfindungsgemäßen Verfahren wird zunächst ein Schaft hergestellt, indem ein Schaftoberteil und eine Brandsohle durch eine Spannnaht 7 miteinander verbunden werden. Die Nahtverbindung ist derart ausgeführt, dass die Naht vom Schuhinnenraum 5 aus nicht sichtbar ist und sich die im Bereich der Naht überlappenden Bereiche der aufeinander genähten Materialschichten nach unten erstrecken. Dann wird ein Maschinen-Leisten bereitgestellt, der eine Unterseite mit einem Relief aufweist. Das Relief der Unterseite des Maschinen-Leistens ist dem Relief eines Fußes vorgegebener Schuhgröße nachgebildet oder jedenfalls stark angenähert. Der in der oben genannten Weise hergestellte Schaft wird über den Maschinen-Leisten gespannt, das heißt aufgeleistet.

Dann wird in ein Unterteil einer mehrteiligen Spritzgießform (auch Laufsohlenform genannt), welches eine Bodenfläche mit einem zum Laufsohlenprofil des herzustellenden Schuhs komplementären Profil aufweist, eine Schicht eines Kunststoffmaterials eingebracht, das für eine Laufsohle geeignet, das heißt unter anderem abriebfest ist. Dieses abriebfeste Kunststoffmaterial für die Laufsohle wird vorzugsweise durch Aufsprühen auf die Bodenfläche des Unterteils der mehrteiligen Spritzgießform eingebracht. Dann wird die mehrteilige Spritzgießform um den sohlenseitigen Bereich des Schaftes derart geschlossen, dass sie allseitig dicht an der Oberfläche des Schaftoberteils anliegt und den Raum für das einzubringende Kunststoffmaterial der Zwischensohle umschließt. Dann wird der sohlenseitige Bereich des Schaftes mit dem Kunststoffmaterial umspritzt, um die Zwischensohle auszubilden, wobei während des Umspritzens des Kunststoffmaterials aufgrund des Spritzdrucks die Brandsohle an die profilierte Sohlenfläche des Maschinen-Leistens gepresst wird, bis das Relief der Innenfläche der Brandsohle zu dem Relief der Unterseite des Maschinen-Leistens komplementär ist. Dabei wird ferner die Nahtverbindung von dem Kunststoffmaterial eingeschlossen.

Das angespritzte Kunststoffmaterial ist vorzugsweise ein Polyurethan mit einer Shore-Härte zwischen 35 und 60 Shore A, wobei in Abhängigkeit von der Sohlendicke ein Polyurethan mit einer Shore-Härte verwendet wird, die bei Sohlen mit etwa 10 bis 20 mm Absatzhöhe bei etwa 35 bis 40 Shore A, bei Sohlen mit etwa 20 bis 35 mm Absatzhöhe bei etwa 40 bis 55 Shore A und bei Sohlen mit etwa 40 bis 50 mm Absatzhöhe bei etwa 55 bis 60 Shore A liegt. Das Polyurethan-Material ist vorzugsweise ein Polyether-Polyurethan mit einer Dichte zwischen 0,3 und 0,4 g/cm³. Besonders bevorzugt ist ein Polyurethan-Material DALTOPED LF35404, DALTOPED Lite Energy oder DALTOPED X-Lite des Herstellers Huntsman oder ein vergleichbares Polyurethan geringer Dichte und mit dynamischer Energierückführung, das hohe Rebound- und lange anhaltende Dämpfungseigenschaften bereitstellt.

Sobald das Kunststoffmaterial nach dem Einspritzen erstarrt ist, wird die Spritzgießform geöffnet und anschließend der Schuh von den Maschinen-Leisten abgenommen, das heißt ausgeleistet.

## Patentansprüche

1. Verfahren zum Herstellen eines Schuhs (1), wobei
a) ein Schaft hergestellt wird, indem ein Schaftoberteil und eine Brandsohle durch eine Nahtverbindung (7) miteinander verbunden werden, wobei die Nahtverbindung (7) zwischen einer Materialschicht des Schaftoberteils (2) und einer Materialschicht der Brandsohle (6) derart ausgeführt wird, dass die dem Schuhinnenraum (5) zugewandten Oberflächen der Materialschicht des Schaftoberteils (2) und der Materialschicht der Brandsohle (6) an der Nahtverbindung (7) aufeinander liegen und sich die Nahtverbindung nicht in den Schuhinnenraum (5), sondern nach außen erstreckt,
b) ein Maschinen-Leisten bereitgestellt wird, dessen Unterseite ein Relief aufweist, das dem Relief einer Fußsohle nachgebildet oder angenähert ist,
c) der hergestellte Schaft auf den Maschinen-Leisten gespannt wird,
d) ein sohlenseitiger Bereich des Schaftes, der die Brandsohle, die Nahtverbindung und einen sich an die Nahtverbindung anschließenden Bereich des Schaftoberteils umfasst, mit einem Kunststoffmaterial umspritzt wird, um eine Kunststoffsohle (3) auszubilden, wobei während des Umspritzens des Kunststoffmaterials aufgrund des Spritzdrucks die Brandsohle an die Unterseite des Maschinen-Leistens gepresst wird, bis das Relief der Innenfläche der Brandsohle zu dem Relief der Unterseite des Maschinen-Leistens komplementär ist, und wobei die Nahtverbindung (7) vollständig von dem Kunststoffmaterial eingeschlossen wird, und
e) nach dem Erstarren des Kunststoffmaterials der Schuh (1) von dem Maschinen-Leisten abgenommen wird.

2. Verfahren zum Herstellen eines Schuhs nach Anspruch 1, **dadurch gekennzeichnet, dass** im Schritt a) das Schaftoberteil und die Brandsohle durch eine Spannnaht miteinander verbunden werden.

3. Verfahren zum Herstellen eines Schuhs nach Anspruch 1 oder 2, **dadurch gekennzeichnet, dass** im Schritt d) vor dem Umspritzen des Kunststoffmaterials eine mehrteilige Spritzgießform um den sohlenseitigen Bereich des Schaftes derart geschlossen wird, dass sie allseitig dicht an der Oberfläche des Schaftoberteils anliegt und den Raum für das einzubringende Kunststoffmaterial umschließt, und dass im Schritt e) die Spritzgießform nach dem Erstarren des Kunststoffmaterials geöffnet wird, bevor der Schuh von dem Maschinen-Leisten abgenommen wird.

4. Verfahren zum Herstellen eines Schuhs nach Anspruch 3, **dadurch gekennzeichnet, dass** vor dem Schließen der mehrteiligen Spritzgießform in ein Unterteil der mehrteiligen Spritzgießform, welches eine Bodenfläche mit einem zum Laufsohlenprofil des herzustellenden Schuhs komplementären Profil aufweist, eine Schicht (4) eines weiteren Kunststoffmaterials eingebracht wird.

5. Verfahren zum Herstellen eines Schuhs nach Anspruch 4, **dadurch gekennzeichnet, dass** die Schicht (4) des weiteren Kunststoffmaterials durch Aufsprühen des weiteren Kunststoffmaterials auf die Bodenfläche eingebracht wird.

6. Verfahren zum Herstellen eines Schuhs nach einem der Ansprüche 1 - 5, **dadurch gekennzeichnet, dass** das Schaftoberteil aus mehreren Materialschichten besteht und im Schritt a) die Nahtverbindung zwischen wenigstens einer dem Schuhinnenraum zugewandten inneren Materialschicht oder sämtlichen Materialschichten des Schaftoberteils und der Materialschicht der Brandsohle ausgeführt wird.

7. Verfahren zum Herstellen eines Schuhs nach einem der Ansprüche 1 - 6, **dadurch gekennzeichnet, dass** die Brandsohle aus mehreren Materialschichten besteht und im Schritt a) die Nahtverbindung zwischen wenigstens einer dem Schuhinnenraum zugewandten inneren Materialschicht oder sämtlichen Materialschichten der Brandsohle und der Materialschicht des Schaftoberteils ausgeführt wird.

8. Verfahren zum Herstellen eines Schuhs nach einem der Ansprüche 1 - 7, **dadurch gekennzeichnet, dass** im Schritt d) der sohlenseitige Bereich des Schaftes mit einem Polyurethan mit einer Shorehärte zwischen 35 und 60 Shore A umspritzt wird.

9. Verfahren zum Herstellen eines Schuhs nach Anspruch 8, **dadurch gekennzeichnet, dass** im Schritt d) der sohlenseitige Bereich des Schaftes mit einem Polyurethan mit einer Shorehärte umspritzt wird, die bei Sohlen mit etwa 10-20 mm Absatzhöhe bei etwa 35-40 Shore A, bei Sohlen mit etwa 20-35 mm Absatzhöhe bei etwa 40-55 Shore A und bei Sohlen mit etwa 40-50 mm Absatzhöhe bei etwa 55-60 Shore A liegt.

10. Verfahren zum Herstellen eines Schuhs nach einem der Ansprüche 1 - 9, **dadurch gekennzeichnet, dass** im Schritt d) der sohlenseitige Bereich des Schaftes mit einem Polyether-Polyurethan mit einer Dichte zwischen 0,3 - 0,4 g/cm³ umspritzt wird.
